# EUROPÄISCHE PATENTSCHRIFT

(11) **EP 3 420 550 B1**
(45) Veröffentlichungstag und Bekanntmachung des Hinweises auf die Patenterteilung: **28.09.2022**
(21) Anmeldenummer: 17710134.2
(22) Anmeldetag: 20.02.2017
(51) Int. Cl.: G09F 3/20

(54) **SIEGEL UND VERFAHREN ZUR VERSIEGELUNG**
SEAL AND SEALING METHOD
SCEAU ET PROCÉDÉ DE SCELLEMENT

(30) Priorität: 25.02.2016 DE 102016203007
(43) Veröffentlichungstag der Anmeldung: 02.01.2019
(73) Patentinhaber: Fraunhofer-Gesellschaft zur Förderung der angewandten Forschung e.V., 80686 München (DE); OHB System AG, 28359 Bremen (DE)
(72) Erfinder: SCHADE, Wolfgang, 38644 Goslar (DE); FLACHENECKER, Günter, 30163 Hannover (DE); THIEL, Markus, 38642 Goslar (DE); RATHJE, Rainer, 28865 Lilienthal (DE); GORECKI, Christian, 28203 Bremen (DE); THOMA, Andreas, 28209 Bremen (DE)
(74) Vertreter: Friese Goeden Patentanwälte PartGmbB
(86) Internationale Anmeldenummer: PCT/EP2017/053771
(87) Internationale Veröffentlichungsnummer: WO 2017/144405

(56) Entgegenhaltungen:
- WO-A1-2015/036045
- CN-Y- 201 345 193
- US-A- 5 351 324

## Beschreibung

Die Erfindung betrifft ein Siegel, enthaltend ein Substrat, welches an einen zu versiegelnden Gegenstand anbringbar ist, sodass dieses bei unbefugter Entfernung verändert wird. Weiterhin betrifft die Erfindung ein Verfahren zur Versiegelung, bei welchem ein Siegel, welches ein Substrat enthält, an einem zu versiegelnden Gegenstand angebracht wird, sodass dieses bei unbefugter Entfernung verändert wird. Siegel und Verfahren der oben bezeichneten Art können dazu eingesetzt werden, unbefugte Manipulationen an Gegenständen aller Art nachzuweisen.

Aus der Praxis ist bekannt, Siegel beispielsweise mit einem Substrat aus bedrucktem und perforiertem Papier herzustellen, welche auf ihrer Unterseite mit einer Kleberschicht versehen sind. Nach dem Anbringen des Siegels auf einem zu versiegelnden Gegenstand ist dieses nicht mehr beschädigungsfrei zu entfernen. Jeder Manipulationsversuch des Siegels manifestiert sich in einer Änderung des optischen Erscheinungsbildes, da entweder das Siegel vollständig fehlt oder jedoch beim Versuch des Entfernens und Wiederaufklebens die unvermeidlich bei der Entfernung des Siegels entstehenden Risse im Substrat nachweisbar sind. Der Austausch des Siegels ist demjenigen, welcher das Siegel unbefugt entfernt hat, in der Regel unmöglich, da ihm solche Siegel mit entsprechendem Druckbild nicht zur Verfügung stehen.

Gleichwohl hat sich gezeigt, dass solche bekannten Papiersiegel nicht in jedem Fall sinnvoll anwendbar sind. So besteht beispielsweise ein Bedürfnis, extrem kleine Objekte zu versiegeln, wie zum Beispiel Mikrochips. Hierdurch können Manipulationen durch Endbenutzer oder Händler vermieden bzw. aufgedeckt werden. Weiterhin besteht ein Bedürfnis, Siegel mit einer höheren Sicherheit bereitzustellen, deren Manipulation weiter erschwert ist. Darüber hinaus besteht ein Bedürfnis, ein Siegel automatisiert auszulesen, um auch große Produktchargen schnell und zuverlässig auf ihre Integrität zu überprüfen.

Aus der US 5,351,324 ist in optisches Sicherheitssystem bekannt. Dieses ermöglicht die Fernabfrage der Integrität einer Behälterdichtung. Eine Vielzahl von Bragg-Gittern ist holographisch in den Kern einer optischen Faser geschrieben, die um die Behälterdichtung angeordnet ist.

Dieses Siegel ist jedoch leicht manipulierbar. Entweder kann der Behälter neben dem als optische Faser verwendeten Siegel geöffnet werden, ohne das Siegel zu beschädigen oder aber das Siegel kann entfernt und durch ein gleichartiges Siegel ersetzt werden.

Die Aufgabe der vorliegenden Erfindung besteht somit darin, ein Siegel mit einer größeren Sicherheit, einer automatisierten Auslesemöglichkeit und in einigen Ausführungsformen auch kleineren Abmessungen bereitzustellen. Weiterhin besteht ein Bedürfnis, ein Siegel auch dann zuverlässig zu prüfen, wenn dies an unzugänglicher Stelle eingesetzt wird und beispielsweise ohne direkte Sicht aus einiger Entfernung ausgelesen werden muss.

Die Aufgabe wird erfindungsgemäß durch eine Vorrichtung gemäß Anspruch 1, ein System gemäß Anspruch 9 und ein Verfahren nach Anspruch 10 gelöst. Vorteilhafte Weiterbildungen der Erfindung finden sich in den Unteransprüchen. Erfindungsgemäß wird ein Siegel vorgeschlagen, welches ein Substrat enthält, welches an einen zu versiegelnden Gegenstand anbringbar ist. Das Substrat weist eine polygonale oder runde Grundform auf und kann mechanisch durch Klemmung oder aber durch Verschweißung oder Verklebung auf dem zu versiegelnden Gegenstand angebracht werden. Sofern der zu versiegelnde Gegenstand ein Gussbauteil aus Metall oder Kunststoff ist, beispielsweise ein Spritzgussbauteil oder ein duroplastisches Bauteil, kann das Siegel auch unmittelbar in den zu versiegelnden Gegenstand eingebettet werden, beispielsweise indem das Siegel vor dem Urformen des zu versiegelnden Gegenstandes in die Form eingelegt wird.

Das Substrat enthält erfindungsgemäß ein Polymer und/oder ein Glas. Somit kann das Substrat in einigen Ausführungsformen der Erfindung ausschließlich ein Polymer enthalten, beispielsweise Polycarbonat, Polyethylen oder Polyethylenterephthalat. In anderen Ausführungsformen der Erfindung kann das Substrat ausschließlich ein Glas enthalten, beispielsweise ein Borosilikatglas, ein Alkalisilikatglas oder ein Aluminiumborosilikatglas. In wiederum anderen Ausführungsformen der Erfindung kann das Substrat sowohl ein Glas als auch ein Polymer enthalten. Dabei können zumindest eine Lage eines Polymers und zumindest eine Lage eines Glases vollflächig miteinander verbunden werden, beispielsweise durch Klebung.

In einigen Ausführungsformen der Erfindung hat das Substrat eine Dicke von weniger als etwa 200 µm. In anderen Ausführungsformen der Erfindung hat das Substrat eine Dicke von weniger als etwa 100 µm. In wiederum anderen Ausführungsformen der Erfindung ist die Dicke des Substrates geringer als etwa 80 µm. Schließlich kann die Dicke des Substrates in einigen Ausführungsformen geringer sein als etwa 50 µm. Dabei weist das Substrat zumindest eine Dicke von mehr als etwa 10 µm, mehr als etwa 20 µm oder mehr als etwa 30 µm auf. Durch ein solch dünnes und im Falle eines Glases auch spröden Substrates wird sichergestellt, dass dieses bei einem Manipulationsversuch, beispielsweise der unbefugten Entfernung, zumindest verformt und oftmals auch beschädigt wird. Darüber hinaus kann in ein solches Substrat in einfacher Weise eine mechanische Spannung eingebracht werden und es beeinträchtigt die Funktion des zu versiegelnden Gegenstandes in der Regel nicht.

Das Substrat kann in jeder Raumrichtung eine laterale Ausdehnung zwischen etwa 1 mm und etwa 40 mm oder zwischen etwa 2 mm und etwa 20 mm oder zwischen etwa 3 mm und etwa 10 mm haben. Die Größe ist dabei nach oben in der Regel nicht beschränkt, sondern einzig durch die Größe des zu versiegelnden bzw. schützenden Gegenstandes und der Handhabbarkeit des dünnen und möglicherweise zerbrechlichen Substrates limitiert.

Weiterhin befindet sich im Substrat zumindest ein optischer Wellenleiter. Der Wellenleiter besteht aus einem Raumbereich, welcher gegenüber dem umgebenden Material einen veränderten Brechungsindex aufweist, sodass an der Grenzfläche Totalreflexion auftritt. Somit kann Licht, welches in den Wellenleiter eintritt, im Wellenleiter in der Ebene des Substrates geführt werden.

Innerhalb des optischen Wellenleiters befindet sich zumindest ein erstes Bragg-Gitter. Das Bragg-Gitter enthält seinerseits eine Mehrzahl von Raumbereichen mit geändertem Brechungsindex, welche im Wellenleiter angeordnet sind. Der Abstand der einzelnen Raumbereiche definiert die Gitterkonstante des Bragg-Gitters. Diese kann konstant sein oder sich entlang der Längserstreckung des Bragg-Gitters verändern. Ein solches Bragg-Gitter hat die Wirkung, dass ein Teilspektrum des im Wellenleiter propagierenden Lichtes reflektiert wird und andere Wellenlängen das Gitter ungestört in Transmissionsrichtung passieren können.

Die ursprünglich bei der Herstellung des Bragg-Gitters definierte Gitterkonstante kann sich durch mechanische Spannung und/oder thermische Ausdehnung verändern. Bei Bruch des Substrates kann sowohl ein Bragg-Gitter als auch der zumindest eine im Substrat befindliche Wellenleiter beschädigt werden. Somit kann eine Veränderung des erfindungsgemäßen Siegels durch eine Änderung des transmittierten oder reflektierten Spektrums nachgewiesen werden, welches nachfolgend als Signatur des Siegels bezeichnet wird.

In einigen Ausführungsformen der Erfindung kann eine Mehrzahl von Bragg-Gittern mit unterschiedlicher Gitterkonstante im Siegel enthalten sein. In einigen Ausführungsformen der Erfindung kann die Anzahl der Bragg-Gitter eines Siegels zwischen 1 und etwa 25 betragen. In anderen Ausführungsformen der Erfindung kann die Anzahl der Bragg-Gitter in einem Siegel zwischen etwa 4 und etwa 20 betragen. In wiederum anderen Ausführungsformen der Erfindung kann die Anzahl der Bragg-Gitter in einem Siegel zwischen etwa 4 und etwa 10 betragen. Dabei können alle Bragg-Gitter eines Siegels unterschiedliche Gitterkonstanten aufweisen. In anderen Ausführungsformen der Erfindung können einige Bragg-Gitter eine identische oder ähnliche Gitterkonstante aufweisen. In diesem Fall können unterschiedliche Bragg-Gitter durch die Signallaufzeit unterschieden werden, wenn gepulste Strahlung zur Abfrage der Signatur in den zumindest einen optischen Pfad des Siegels eingekoppelt wird

Erfindungsgemäß wird nun vorgeschlagen, nach Anbringen des Siegels in den zumindest einen optischen Wellenleiter ein optisches Abfragesignal einzukoppeln und das reflektierte und/oder transmittierte Licht zu erfassen. Dieses vom Siegel auf den optischen Abfrageimpuls hin erzeugte Signal wird nachfolgend als Signatur des Siegels bezeichnet und ist abhängig von der Art und der Anzahl der Bragg-Gitter, der Art und Anzahl der optischen Wellenleiter im Siegel, der Temperatur, der mechanischen Spannung des Siegels und der Art des optischen Abfrageimpulses. Das erstmals nach Aufbringen des Siegels auf einen zu schützenden Gegenstand ausgelesene Signal kann als Referenzsignal gespeichert werden. Wenn zu einem späteren Zeitpunkt die Unversehrtheit des Siegels geprüft werden soll, so kann durch erneute Abfrage mit einem identischen oder ähnlichen Abfragesignal die Unversehrtheit des Siegels überprüft werden. Sofern sich das vom Siegel zu einem späteren Zeitpunkt erzeugte Signal vom Referenzsignal unterscheidet, ist die Manipulation des Siegels bewiesen.

In einigen Ausführungsformen der Erfindung kann im Substrat weiterhin zumindest ein Koppler angeordnet sein. Hierdurch können mehrere optische Wellenleiter im Siegel mit einem Anschluss eines Verbindungswellenleiters verbunden werden, sodass die Zuverlässigkeit und die Manipulationssicherheit des Siegels ansteigen, ohne den Aufwand für die Abfrage des Siegels zu vergrößern.

In einigen Ausführungsformen der Erfindung kann der zumindest eine Wellenleiter dazu eingerichtet sein, eine Single-Mode-Lichtleitung zu ermöglichen. In Abhängigkeit der für die Abfrage verwendeten Wellenlänge kann dies bedeuten, dass der Wellenleiter einen Durchmesser von etwa 5 µm bis etwa 15 µm oder von etwa 8 µm bis etwa 12 µm aufweist. Hierdurch kann die Fälschungssicherheit des Siegels weiter erhöht werden.

In einigen Ausführungsformen der Erfindung kann zumindest ein erstes Bragg-Gitter eine polarisationsabhängige Reflexion bzw. Transmission zeigen. Dies kann dadurch erreicht werden, dass die einzelnen Raumbereiche des Bragg-Gitters mit geändertem Brechungsindex nicht kreis- oder kugelförmig ausgestaltet sind, sondern länglich bzw. in Form eines Ellipsoides, dessen kurze Halbachse kleiner ist als der Durchmesser des Wellenleiters. In diesem Fall zeigt das Bragg-Gitter bei unterschiedlicher Polarisationsrichtung des optischen Abfragesignals ein unterschiedliches Reflexions- bzw. Transmissionsverhalten. Hierdurch kann die Signatur des Siegels komplexer gestaltet werden, sodass sich hieraus eine höhere Fälschungssicherheit und ein verbesserter Nachahmungsschutz ergibt.

In einigen Ausführungsformen der Erfindung kann das Siegel weiterhin einen Verbindungswellenleiter enthalten, mit welchem das Siegel mit einer Auslesevorrichtung verbindbar ist. Der Verbindungswellenleiter kann eine an sich bekannte optische Polymer- oder Glasfaser enthalten oder daraus bestehen. Der Verbindungswellenleiter kann an seinem Ende mit einem an sich bekannten optischen Steckverbinder verbunden sein. Auf diese Weise kann das Siegel einfach mit einer Auslesevorrichtung verbunden werden und nach erfolgter Auslese wieder getrennt werden, ohne dass es zur mechanischen Beanspruchung oder gar Beschädigung des Siegels kommt. Weiterhin kann das Siegel bei entsprechender Länge des Verbindungswellenleiters auch dann ausgelesen werden, wenn dieses verdeckt eingebaut ist, ohne dass eine direkte Sichtverbindung zum Benutzer besteht.

In einigen Ausführungsformen der Erfindung kann eine Mehrzahl versiegelter Gegenstände wieder versiegelt werden. Beispielsweise können mehrere integrierte Schaltkreise jeweils individuell durch ein Siegel geschützt werden und eine Mehrzahl solcher Schaltkreise kann in einer Baugruppe, beispielsweise einer Leiterplatte, verbunden sein. Diese lässt sich mit einem weiteren Siegel schützen. In diesem Fall kann ein inneres Siegel über die nach außen geführten Verbindungswellenleiter auch dann geprüft werden, wenn es sich innerhalb der äußeren Versiegelungssphäre befindet. Ein Bruch der äußeren Versiegelungssphäre ist dazu nicht notwendig.

In einigen Ausführungsformen der Erfindung kann das Substrat an zumindest einer Seitenkante von einem Rahmen umgeben sein. Ein solcher Rahmen kann einerseits dazu verwendet werden, eine optische Faser mit dem zumindest einen Wellenleiter im Substrat zu verbinden, um auf diese Weise das Siegel mit einer Auslesevorrichtung zu verbinden. Der Rahmen ermöglicht es dabei, die optische Faser vor mechanischer Beschädigung geschützt zu führen. Weiterhin kann der Rahmen dazu dienen, das Eindringen von Streulicht über die Seitenkanten zu vermeiden oder zumindest zu reduzieren, sodass die Auslese der Signatur des Siegels mit größerer Genauigkeit erfolgen kann. Durch das anschließende Aufkleben des optischen Siegels mittels des Rahmens kann der Verbindungswellenleiter vor mechanischer Manipulationen oder Entnahme geschützt.

In einigen Ausführungsformen der Erfindung kann der Rahmen als Doppelrahmen mit einem inneren, am Substrat anliegenden Rahmen und einem äußeren, den inneren Rahmen umgebenden Rahmen ausgebildet sein. Der Doppelrahmen kann dazu dienen, vor einem seitlichen Angriff auf das Siegel zu schützen. Hierbei kann der innere Rahmen an das Substrat bzw. an dessen Begrenzungskanten montiert werden. Nachfolgend wird der Verbindungswellenleiter um den inneren Rahmen gewickelt. Dabei erfolgt zumindest eine Umschlingung des inneren Rahmens, in einigen Ausführungsformen der Erfindung auch mehrere Umschlingungen, beispielsweise zwischen 2 und etwa 10. Nachfolgend wird der äußere Rahmen aufgesetzt und befestigt, beispielsweise durch Klebung oder Verschweißung oder eine Vergussmasse. Der äußere Rahmen kann Eingangs- und Ausgangsdurchführungen aufweisen, um den Verbindungswellenleiter ein- und auszuführen. Sofern beim Manipulationsversuch der Rahmen angebohrt wird, führt dies zu einer Durchtrennung des Verbindungswellenleiters. Hierdurch ist das Auslesen der Signatur unmöglich, so dass die Manipulation einfach erkannt werden kann.

In einigen Ausführungsformen der Erfindung kann der Verbindungswellenleiter zumindest ein zweites Bragg-Gitter enthalten. Das zweite Bragg-Gitter kann zur Bestimmung der Temperatur zum Zeitpunkt der Auslese des Siegels dienen. Hierdurch kann die sich mit der Temperatur ändernde Signatur des Siegels normiert werden, sodass auch bei schwankenden Temperaturen bestimmt werden kann, ob das Siegel unbefugt verändert wurde.

Sofern das Siegel mit einem Doppelrahmen ausgestattet ist, kann das zweite Bragg-Gitter, welches zur Temperaturmessung vorgesehen ist, zwischen dem Innenrahmen und dem Außenrahmen in einem Längsabschnitt des Verbindungswellenleiters angeordnet sein, welcher ohne Krümmung verlegt und optional vom Substrat mechanisch entkoppelt ist, so dass das zweite Bragg-Gitter vor mechanischen Änderungen der Gitterkonstante zu schützen. Hierdurch kann die Genauigkeit der Temperaturmessung erhöht sein.

Weiterhin betrifft die Erfindung ein System mit einem vorstehend beschriebenen optischen Siegel sowie einer Auslesevorrichtung. Die Auslesevorrichtung ist dazu eingerichtet, ein optisches Abfragesignal zu erzeugen und das vom Siegel reflektierte oder transmittierte Licht zu erfassen. Weiterhin kann die Auslesevorrichtung ein Spektrometer zur Analyse des reflektierten bzw. transmittierten Lichtes enthalten. Optional kann die Auslesevorrichtung darüber hinaus die Laufzeit des optischen Signals bestimmen. Schließlich kann die Auslesevorrichtung eine Auswerteeinrichtung und einen optionalen Referenzsignalspeicher enthalten. Die Auswerteeinrichtung kann beispielsweise ein Mikroprozessor oder ein digitaler Signalprozessor sein oder einen solchen enthalten. Hierdurch kann die Signatur des Siegels zum Abfragezeitpunkt mit der ursprünglichen, im Referenzsignalspeicher abgelegten Signatur verglichen werden, um auf diese Weise eine Veränderung des Siegels oder dessen Unversehrtheit nachzuweisen.

In einigen Ausführungsformen der Erfindung kann das Siegel beim Anbringen an den zu versiegelnden Gegenstand einer mechanischen Spannung ausgesetzt sein und in diesem Zustand fixiert werden. Somit kann auch dann, wenn das Siegel unbefugt entfernt und durch ein nominell gleichartiges Siegel mit gleichen Wellenleitern und identischen Bragg-Gittern ersetzt wurde, die Manipulation nachgewiesen werden, da es in der Regel aussichtlos ist, dass ersetzte Siegel mit gleicher mechanischer Spannung bzw. identischer Verformung an dem zu versiegelnden Gegenstand anzubringen.

In einigen Ausführungsformen der Erfindung kann das zur Erfassung der Signatur des Siegels verwendete erste und zweite optische Abfragesignal identisch sein. Somit dienen die Bezeichnungen "erstes" und "zweites" optisches Abfragesignal für gleichartige Signale, welche zu unterschiedlichen Zeitpunkten in das optische Siegel eingekoppelt wurden.

In einigen Ausführungsformen der Erfindung kann das erste und/oder zweite optische Abfragesignal eine Mehrzahl von Einzelpulsen enthalten, welche zumindest teilweise unterschiedliche Wellenlängen und/oder unterschiedliche Dauer und/oder unterschiedliche Polarisation aufweisen. Damit kann ein an das jeweilige Siegel bzw. an eine Gruppe von Siegeln angepasstes Abfragesignal erzeugt werden, welches berücksichtigt, ob polarisationsabhängige Bragg-Gitter vorhanden sind oder ob unterschiedliche Bragg-Gitter gleicher Gitterkonstante anhand der Laufzeit diskriminiert werden sollen. Schließlich kann das Abfragesignal auch berücksichtigen, ob Bragg-Gitter mit unterschiedlicher Gitterkonstante im Siegel vorhanden sind, welche zur Auslese eine große spektrale Breite des Abfragesignals benötigen oder ob Abfragepulse mit kurzer Zeitstruktur notwendig sind.

Dementsprechend kann die Lichtquelle der Auslesevorrichtung in einigen Ausführungsformen der Erfindung zumindest eine Superlumineszenzdiode oder ein Halbleiterlaser oder eine Gasentladungslampe sein oder eine solche Lichtquelle enthalten.

Nachfolgend soll die Erfindung anhand von Figuren ohne Beschränkung des allgemeinen Erfindungsgedankens näher erläutert werden. Dabei zeigt:
- Figur 1: ein erstes Ausführungsbeispiel eines erfindungsgemäßen Siegels.
- Figur 2: zeigt ein zweites Ausführungsbeispiel des erfindungsgemäßen Siegels.
- Figur 3: zeigt beispielhaft eine Signatur eines Siegels.
- Figur 4: zeigt die Veränderung der Signatur mit der mechanischen Spannung des Substrates.
- Figur 5: zeigt ein Anwendungsbeispiel des erfindungsgemäßen Siegels.
- Figur 6: zeigt die Veränderung der Signatur bei Beschädigung des Siegels.
- Figur 7: zeigt das Blockschaltbild einer Ausleseeinrichtung.

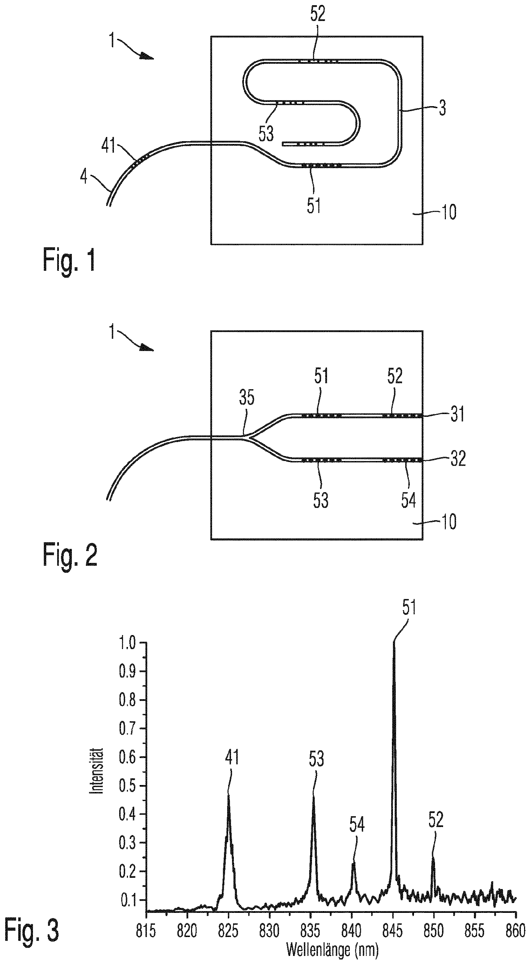

Figur 1 zeigt ein erstes Ausführungsbeispiel eines erfindungsgemäßen Siegels 1. Das Siegel 1 enthält ein Substrat 10, welches beispielsweise aus einem Polymer oder einem Dünnglas oder einem Verbundmaterial aus zumindest einem Polymer und zumindest einem Dünnglas hergestellt ist. Das Substrat 10 weist eine Dicke von weniger als etwa 200 µm auf. In anderen Ausführungsbeispielen der Erfindung kann das Substrat eine geringere Dicke aufweisen, beispielsweise weniger als etwa 100 µm, weniger als etwa 80 µm oder weniger als etwa 50 µm.

Das Substrat 10 ist im dargestellten Ausführungsbeispiel etwa quadratisch. Es kann in einigen Ausführungsformen der Erfindung jedoch auch eine andere polygonale oder runde Form aufweisen. Die Flächenausdehnung des Substrates 10 kann zwischen etwa 1 mm und etwa 40 mm gewählt sein, wobei auch größere oder kleinere Abmessungen gewählt werden können.

Im Substrat 10 befindet sich zumindest ein Wellenleiter 3. Der Wellenleiter 3 besteht aus einem Kern und einem Mantel, welche jeweils unterschiedliche Brechungsindizes aufweisen, sodass Licht durch Totalreflexion an der Grenzfläche zwischen Kern und Mantel geführt werden kann.

Als Mantel wird erfindungsgemäß das Material des

Substrates 10 verwendet, sodass der Wellenleiter 3 durch Einschreiben des Kerns in das Substrat erzeugt werden kann. Der Wellenleiter 3 kann geradlinig oder mäanderförmig im Substrat verlegt sein. Die dargestellte Geometrie ist insoweit lediglich beispielhaft zu verstehen. Die Erfindung lehrt nicht die Verwendung eines besonderen Verlaufs des Wellenleiters 3 als Lösungsprinzip.

Im Wellenleiter 3 sind im dargestellten Ausführungsbeispiel vier erste Bragg-Gitter 51, 52, 53 und 54 angeordnet. Jedes Bragg-Gitter enthält eine Mehrzahl von Raumbereichen, deren Brechungsindex sich vom Brechungsindex des Kernes unterscheidet. Diese Raumbereiche sind in einem vorgebbaren Abstand zueinander angeordnet, welcher die Gitterkonstante des Bragg-Gitters definiert. Ein einzelnes Bragg-Gitter 51, 52, 53 oder 54 kann eine Ausdehnung zwischen 1 mm und etwa 30 mm oder zwischen etwa 2 mm und etwa 10 mm aufweisen.

Der Wellenleiter 3 im Inneren des Substrates 10 kann ebenso wie die ersten Bragg-Gitter 51, 52, 53 und 54 durch Punktzu-Punkt-Belichten mit einem Kurzpulslaser erzeugt werden. Dies erlaubt es, jedes Siegel mit einer individuellen Signatur zu erzeugen. In anderen Ausführungsformen der Erfindung kann die Belichtung mittels einer Maske erfolgen, um in den belichteten Raumbereichen den Brechungsindex so weit zu ändern, dass die gewünschten Strukturen im Substrat 10 erzeugt werden. Damit können identische Siegel mit geringem Aufwand gefertigt werden. Gleichwohl zeigen auch Siegel, welche mit identischen Herstellungsparametern reproduziert wurden, hinreichende Unterschiede in den Signaturen, so dass diese dennoch unterschieden werden können und der Ersatz eines gebrochenen Siegels durch ein identisches Siegel unmöglich ist. Dadurch kann die Sicherheit erhöht sein.

Der Wellenleiter 3 wird an einer Außenkante des Substrates 10 mit einem Verbindungswellenleiter 4 kontaktiert. Der Verbindungswellenleiter 4 kann beispielsweise eine Polymeroder Glasfaser sein oder eine solche enthalten. In einigen Ausführungsformen der Erfindung kann der Wellenleiter 3 an beiden Enden mit einem Verbindungswellenleiter 4 verbunden sein. In diesem Fall kann die Signatur des Siegels in Reflexion und in Transmission bestimmt werden, um auf diese Weise die Genauigkeit zu erhöhen. In anderen Ausführungsformen der Erfindung befindet sich nur ein einziger Verbindungswellenleiter 4 an dem Siegel 1, wie in Figur 1 dargestellt ist.

Im Verbindungswellenleiter 4 befindet sich ein optionales zweites Bragg-Gitter 41. Das Bragg-Gitter 41 dient der Bestimmung der Temperatur der Umgebung des Siegels 1, sodass die vom Siegel 1 erzeugte Signatur um Temperaturschwankungen korrigiert werden kann.

Figur 2 zeigt eine zweite Ausführungsform der vorliegenden Erfindung. Gleiche Bestandteile der Erfindung sind mit gleichen Bezugszeichen versehen, sodass sich die nachfolgende Beschreibung auf die wesentlichen Unterschiede beschränkt.

Gemäß Figur 2 befindet sich auf dem Substrat 10 weiterhin ein Koppler 35, welcher dazu eingerichtet ist, über den Verbindungswellenleiter 4 eingekoppeltes Licht auf zwei Wellenleiter 31 und 32 aufzuteilen. In jedem der Wellenleiter 31 und 32 befindet sich ein erstes Bragg-Gitter 51 und 52 bzw. 53 und 54. Das an diesen Bragg-Gittern reflektierte Licht wird im Koppler 35 wieder zusammengeführt und kann dem Verbindungswellenleiter 4 zugeführt werden.

In gleicher Weise wie anhand der Figur 2 mit einem einzigen Koppler 35 gezeigt, können Wellenleiter mehrfach baumartig aufgespalten werden, sodass die gesamte Fläche des Substrates 10 von einem Geflecht von Wellenleitern mit jeweils zugeordneten Bragg-Gittern durchzogen ist.

Ebenfalls kann der mäanderförmige, in Figur 1 angedeutete, Verlauf des Wellenleiters 3 mit einem oder mehreren Kopplern kombiniert werden, um eine größere Fläche des Substrates 10 zu erfassen.

Figur 3 zeigt die spektrale Antwort bzw. die Signatur eines optischen Siegels, wie dies anhand der Figuren 1 und 2 beispielhaft erläutert wurde. Dargestellt ist die Intensität auf der Ordinate gegen die Wellenlänge auf der Abszisse. Figur 3 zeigt die Intensität reflektierten Lichtes in Abhängigkeit der Wellenlänge bei Beleuchtung mit spektral breitbandiger Strahlung, beispielsweise aus einer Superlumineszenzdiode.

Wie aus Figur 3 ersichtlich ist, weist das Reflexionsspektrum 5 Maxima auf. Das erste Maximum bei etwa 825 nm kann dem zweiten Bragg-Gitter 41 im Verbindungswellenleiter 4 zugeordnet werden. Dieses Signal dient in an sich bekannter Weise der Erfassung der Temperatur, sodass die Signatur der ersten Bragg-Gitter 51, 52, 53 und 54 auf eine Normtemperatur normiert werden kann.

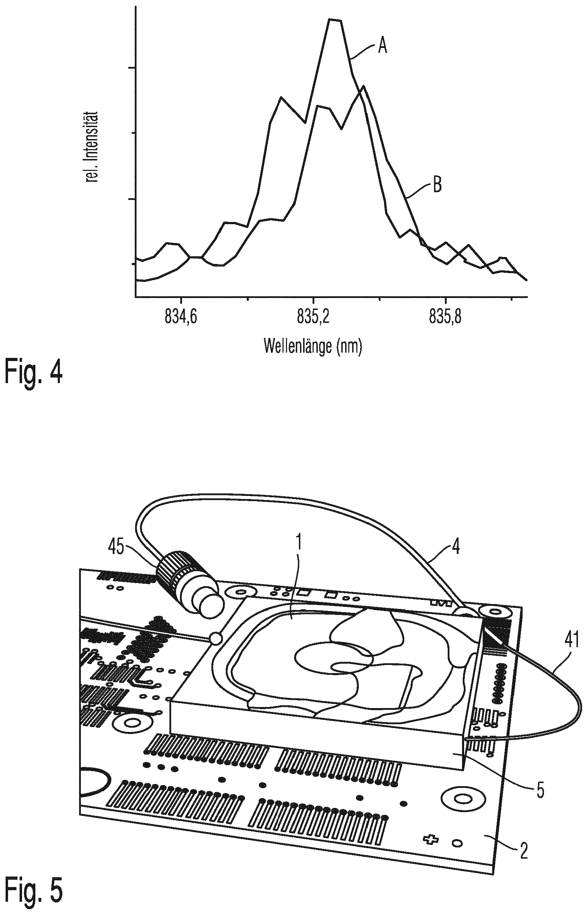

Dargestellt sind weiter die vier Reflexionsmaxima 51, 52, 53 und 54, welche den vier im Siegel vorhandenen Bragg-Gittern 51, 52, 53 und 54 mit jeweils unterschiedlicher Gitterkonstante zugeordnet werden können. Diese variieren hinsichtlich der spektralen Breite, der Position des Reflexionsmaximums oder des Untergrundes, wenn unterschiedliche Siegel ausgelesen werden oder aber ein an bereits an einem Gegenstand angebrachtes Siegel entweder beschädigt wurde oder mit unterschiedlicher mechanischer Spannung auf dem zu versiegelnden Gegenstand angebracht wurde. Somit kann eine Manipulation des Siegels 1 nachgewiesen werden, wenn die anhand der Figur 3 beispielhaft erläuterte Signatur nach der Montage des Siegels erfasst und gespeichert wurde und von einer zu einem späteren Zeitpunkt aufgenommenen Signatur verschieden ist. Dieser Zusammenhang wird beispielhaft anhand der Figur 4 erläutert.

Figur 4 zeigt eine vergrößerte Darstellung aus Figur 3 mit dem Intensitätsmaximum des Bragg-Gitters 53. Dargestellt ist in Kurve A die spektrale Antwort eines Bragg-Gitters bei einer ersten mechanischen Spannung des Substrates 10 und in Kurve B die spektrale Antwort des Bragg-Gitters 53 bei einer zweiten mechanischen Spannung des Substrates 10. Da im Regelfall allein durch die Montage unterschiedliche mechanische Spannungen im Substrat 10 induziert werden, können selbst nominell identische Siegel nach der Montage auf einem zu versiegelnden Gegenstand anhand ihrer Signatur voneinander unterschieden werden. Dies gilt umso mehr, wenn ein bereits montiertes Siegel beschädigt oder durch ein neues Siegel unbefugter Weise ersetzt wird. Auch in diesem Fall lassen sich die Manipulationsversuche anhand der unterschiedlichen Signatur eindeutig nachweisen. Auch die nur teilweise Entfernung bewirkt eine Änderung der mechanischen Spannung im Substrat, so dass sich die Signatur des Siegels ändert.

Die Figuren 3 und 4 zeigen eine vergleichsweise einfache Signatur, welche lediglich die spektrometrisch bestimmte Intensität in Abhängigkeit der Wellenlänge nutzt. Andere Ausführungsformen der Erfindung können zusätzlich die Polarisation oder die Signallaufzeit heranziehen, um eine komplexere Signatur des optischen Siegels zu bestimmen und auf diese Weise Manipulationsversuche noch zuverlässiger nachzuweisen.

Figur 5 zeigt beispielhaft die Montage eines optischen Siegels 1 auf einem zu schützenden Gegenstand 2. Der Gegenstand 2 umfasst einen Mikrochip, welcher auf einer an sich bekannten Platine montiert ist. Der Mikrochip ist auf der Platine von einem Rahmen 5 umgeben, der beispielsweise durch Klebung auf der Platine befestigt ist.

Auf dem Rahmen 5 befindet sich das Siegel 1, welches ebenfalls durch Klebung mit dem Rahmen verbunden ist. Hierbei können mechanische Spannungen aufgebracht werden, um das Siegel 1 bzw. dessen Substrat 10 in definierter Weise zu verformen und eine für jedes Siegel 1 einzigartige mechanische Spannung aufzuprägen, welche die Signatur beeinflusst, wie vorstehend anhand der Figuren 3 und 4 erläutert wurde.

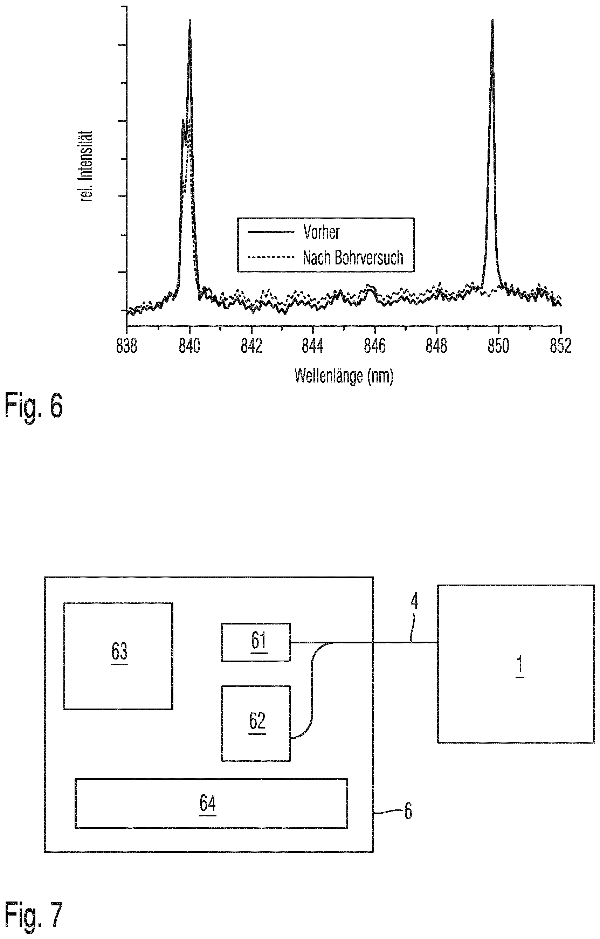

Wie bereits vorstehend erläutert, ist das Siegel 1 mit einem Verbindungswellenleiter 4 verbunden, in welchem sich ein zweites Bragg-Gitter 41 zur Temperaturerfassung befindet. Der Verbindungswellenleiter 4 ist mit einem Steckverbinder 45 versehen, um auf diese Weise mit einer Auslesevorrichtung verbunden zu werden, welche anhand der Figur 7 erläutert werden wird.

Da der Rahmen 5 und das Siegel 1 den darunter liegenden Mikrochip mit allen Kontakten umschließt, kann der Mikrochip nicht kompromittiert werden, beispielsweise durch Auslöten oder durch anderweitige Manipulation.

Hierzu ist es erforderlich, das Siegel 1 gewaltsam zu beschädigen. Eine solche Manipulation ist eindeutig anhand der Signatur nachweisbar, da andere Siegel entweder einen anderen Verlauf der Wellenleiter, andere Gitterkonstanten der Bragg-Gitter oder sonstige Unterschiede zu dem ursprünglich vorhandenen Siegel aufweisen. Selbst wenn ein nominell identisches Siegel auf den Rahmen 5 montiert würde, so würde dies aufgrund seiner geringen Dicke bei der Montage zwangsläufig eine andere mechanische Spannung erfahren, welche ebenfalls die Signatur ändert, wie anhand der Figur 4 erläutert.

Figur 6 zeigt nochmals beispielhaft die Änderung der Signatur bei Beschädigung des Siegels mit einem Laserstrahl. Dargestellt sind die Reflexionsmaxima zweier Bragg-Gitter in einem Siegel, welches, wie anhand der Figur 2 erläutert, zwei Wellenleiter 31 und 32 aufweist. Zur Erfassung der Signatur wurde vergleichsweise breitbandige Strahlung, beispielsweise aus einer Superlumineszenzdiode, in den Wellenleiter eingeleitet und das an den Bragg-Gittern, reflektierte Licht erfasst.

Um eine beispielhafte Manipulation des Siegels durchzuführen, wurde mittels eines Lasers das Substrat 10 durchbohrt.

Wie Figur 6 weiter zeigt, ist selbst diese vergleichsweise geringe Schädigung anhand der Signatur eindeutig nachweisbar. So ist das Maximum bei etwa 850 nm vollständig verschwunden. Selbst das Maximum bei 840 nm weist eine geringere Amplitude auf. Darüber hinaus hat der zwischen beiden Maxima befindliche Untergrund an Intensität zugenommen.

Somit lässt sich selbst eine geringe Beschädigung durch Laserstrahlung eindeutig nachweisen.

Anhand von Figur 7 wird exemplarisch eine Auslesevorrichtung 6 erläutert. Die Auslesevorrichtung 6 weist einen Anschluss auf, an welchem der Verbindungswellenleiter 4 angeschlossen werden kann, um ein Siegel 1 mit der Auslesevorrichtung 6 zu verbinden.

Die Auslesevorrichtung 6 weist weiterhin eine Lichtquelle 61 auf, deren Strahlung über den Verbindungswellenleiter 4 dem Siegel 1 zugeführt werden kann. Im Siegel 1 breitet sich dieses Licht in den Wellenleitern aus, wie vorstehend anhand der Figuren 1 und 2 erläutert wurde.

Das Licht wird an den Bragg-Gittern des Siegels 1 reflektiert. Dieses reflektierte Licht durchläuft erneut den Verbindungswellenleiter 4 und gelangt zu einem Koppler im Inneren der Auslesevorrichtung 6. Dieser verbindet ein Spektrometer 62, beispielsweise ein AWG oder ein Mikrospiegelarray, mit dem Siegel 1.

Das solchermaßen ermittelte Antwortsignal wird für die Zwecke der vorliegenden Erfindung als Signatur des Siegels 1 bezeichnet. Diese Signatur kann mittels einer Auswerteeinrichtung 63 verarbeitet werden, welche beispielsweise einen Mikroprozessor oder einen DSP enthält. Alternativ oder zusätzlich kann eine solche Signatur in einem Referenzsignalspeicher 64 abgelegt werden. Der Referenzsignalspeicher 64 kann beispielsweise einen Halbleiterspeicher, eine Festplatte oder auch einen Cloud-Speicher umfassen.

Erfindungsgemäß wird vorgeschlagen, nach der Montage des Siegels 1 mit einem ersten optischen Abfragesignal in der beschriebenen Weise eine Signatur auszulesen, und diese im Referenzsignalspeicher 64 abzulegen. Soll dann zu einem späteren Zeitpunkt die Unversehrtheit des Siegels 1 kontrolliert werden, so wird erneut in der beschriebenen Weise mit einem zweiten optischen Abfragesignal eine Signatur des Siegels 1 erfasst. Diese zweite Signatur kann dann mit der Auswerteeinrichtung 63 mit dem zuvor abgelegten Referenzsignal aus dem Referenzsignalspeicher 64 verglichen werden. Bei Abweichungen, welche beispielsweise automatisiert durch Mustererkennung erkannt werden können, kann die Auslesevorrichtung 6 einen akustischen und/oder optischen Alarm aussenden, welcher auf die Kompromittierung des Siegels 1 hinweist.

Das von der Lichtquelle 1 erzeugte optische Auslesesignal kann eine Mehrzahl von Lichtpulsen aufweisen, welche sich in ihrer Zeitstruktur, mit ihrem Spektralbereich oder der Polarisationsrichtung unterscheiden, um auf diese Weise auch komplexe Siegel 1 auslesen zu können.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Siegel (1), enthaltend ein Substrat (10), welches an einen zu versiegelnden Gegenstand (2) anbringbar ist, so dass dieses bei unbefugter Entfernung verändert wird, wobei das Substrat (10) eine polygonale oder runde Form aufweist und ein Polymer und/oder ein Glas enthält oder daraus besteht und im Substrat (10) zumindest ein optischer Wellenleiter (3, 31, 32) angeordnet ist, in welchem zumindest ein erstes Bragg-Gitter (51, 52, 53, 54) angeordnet ist, **dadurch gekennzeichnet, dass** das Substrat eine Dicke von weniger als etwa 200 µm, eine Länge von mehr als 1 mm und eine Breite von mehr als 1 mm aufweist.

2. Siegel nach Anspruch 1, **dadurch gekennzeichnet, dass** das Substrat (10) eine Dicke von weniger als etwa 100 µm oder weniger als etwa 80 µm oder weniger als etwa 50 µm aufweist.

3. Siegel nach Anspruch 1 oder 2, **dadurch gekennzeichnet, dass** im Substrat weiterhin zumindest ein Koppler (35) angeordnet ist.

4. Siegel nach einem der Ansprüche 1 bis 3, **dadurch gekennzeichnet, dass** der zumindest eine Wellenleiter (3, 31, 32) dazu eingerichtet ist, eine Single-Mode Lichtleitung zu ermöglichen.

5. Siegel nach einem der Ansprüche 1 bis 4, **dadurch gekennzeichnet, dass** zumindest ein erstes Bragg-Gitter (51, 52, 53, 54) eine polarisationsabhängige Reflektion und/oder Transmission zeigt.

6. Siegel nach einem der Ansprüche 1 bis 5, **dadurch gekennzeichnet, dass** das Substrat (10) an zumindest einer Begrenzung von einem Rahmen (5) umgeben ist.

7. Siegel nach einem der Ansprüche 1 bis 6, weiterhin enthaltend einen Verbindungswellenleiter (4).

8. Siegel nach Anspruch 7, **dadurch gekennzeichnet, dass** im Verbindungswellenleiter (4) ein zweites Bragg-Gitter (41) angeordnet ist.

9. System mit einem Siegel nach einem der Ansprüche 1 bis 8, weiterhin enthaltend eine Auslesevorrichtung (6), welche eine Lichtquelle (61) und/oder ein Spektrometer (62) und/oder eine Auswerteeinrichtung (63) und/oder einen Referenzsignalspeicher (64) enthält.

10. Verfahren zur Versiegelung, bei welchem ein Siegel (1), welches ein Substrat (10) enthält, an einen zu versiegelnden Gegenstand (2) angebracht wird, so dass dieses bei unbefugter Entfernung verändert wird, wobei das Substrat (10) eine polygonale oder runde Form aufweist und ein Polymer und/oder ein Glas enthält oder daraus besteht und im Substrat (10) zumindest ein optischer Wellenleiter (3, 31, 32) angeordnet ist, in welchem zumindest ein erstes Bragg-Gitter (51, 52, 53, 54) angeordnet ist, **dadurch gekennzeichnet, dass** das Substrat eine Dicke von weniger als 200 µm, eine Länge von mehr als 1 mm und eine Breite von mehr als 1 mm aufweist.

11. Verfahren nach Anspruch 10, **dadurch gekennzeichnet, dass** das Substrat (10) beim Anbringen an den zu versiegelnden Gegenstand (2) einer mechanischen Spannung ausgesetzt ist.

12. Verfahren nach einem der Ansprüche 10 oder 11, **dadurch gekennzeichnet, dass** nach dem Anbringen des Substrates an den zu versiegelnden Gegenstand (2) ein erstes optisches Abfragesignal in den zumindest einen Wellenleiter (3, 31, 32) eingekoppelt und das an den Bragg-Gittern (51, 52, 53, 54) reflektierte Signal als Signatur erfasst und als Referenzsignal (A) in einem Referenzsignalspeicher (64) abgelegt wird.

13. Verfahren nach einem der Ansprüche 10 bis 12, **dadurch gekennzeichnet, dass** zur Überprüfung des Siegels ein zweites optisches Abfragesignal in den zumindest einen Wellenleiter (3, 31, 32) eingekoppelt und das an den Bragg-Gittern (51, 52, 53, 54) reflektierte Signal (B) als Signatur erfasst und mit dem Referenzsignal (A) verglichen wird.

14. Verfahren nach einem der Ansprüche 10 bis 13, **dadurch gekennzeichnet, dass** das erste und/oder zweite optische Abfragesignal eine Mehrzahl von Einzelpulsen enthält, welche zumindest teilweise unterschiedliche Wellenlängen und/oder unterschiedliche Dauer und/oder unterschiedliche Polarisation aufweisen.

15. Verfahren nach einem der Ansprüche 10 bis 14, **dadurch gekennzeichnet, dass** die Temperatur mit zumindest einem zweiten Bragg-Gitter (41) gemessen wird und das an den Bragg-Gittern (51, 52, 53, 54) reflektierte Signal auf die Temperatur normiert wird.

## Claims

1. Seal (1) containing a substrate (10), which can be applied to an object (2) to be sealed so that this seal is changed when it is removed without authorization, the substrate (10) having a polygonal or round shape and containing or consisting of a polymer and/or a glass, and the substrate (10) accommodating at least one optical waveguide (3, 31, 32), in which at least a first Bragg grating (51, 52, 53, 54) is arranged, **characterized in that** the substrate has a thickness of less than about 200 µm, a length of more than 1 mm and a width of more than 1 mm.

2. Seal according to claim 1, **characterized in that** the substrate (10) has a thickness of less than about 100 µm or less than about 80 µm or less than about 50 µm.

3. Seal according to claim 1 or 2, **characterized in that** at least one coupler (35) is also arranged in the substrate.

4. Seal according to any of claims 1 to 3, **characterized in that** the at least one waveguide (3, 31, 32) is configured to allow a single-mode light conduction.

5. Seal according to any of claims 1 to 4, **characterized in that** at least a first Bragg grating (51, 52, 53, 54) shows a polarization-dependent reflection and/or transmission.

6. Seal according to any of claims 1 to 5, **characterized in that** the substrate (10) is surrounded by a frame (5) on at least one boundary.

7. Seal according to any of claims 1 to 6, further containing a connection waveguide (4).

8. Seal according to claim 7, **characterized in that** a second Bragg grating (41) is arranged in the connection waveguide (4).

9. System having a seal according to any of claims 1 to 8, further containing a reading device (6), which contains a light source (61) and/or a spectrometer (62) and/or an evaluation unit (63) and/or a reference signal memory (64).

10. Method for sealing, in which a seal (1) containing a substrate (10) is applied to an object (2) to be sealed, so that this seal is changed when it is removed without authorization, the substrate (10) having a polygonal or round shape and containing or consisting of a polymer and/or a glass, and the substrate (10) accommodating at least one optical waveguide (3, 31, 32), in which at least a first Bragg grating (51, 52, 53, 54) is arranged, **characterized in that** the substrate has a thickness of less than about 200 µm, a length of more than 1 mm and a width of more than 1 mm.

11. Method according to claim 10, **characterized in that**, when applied to the object (2) to be sealed, the substrate (10) is exposed to a mechanical stress.

12. Method according to any of claims 10 or 11, **characterized in that**, after applying the substrate to the object (2) to be sealed, a first optical interrogation signal is coupled into the at least one waveguide (3, 31, 32) and the signal reflected by the Bragg gratings (51, 52, 53, 54) is detected as a signature and stored in a reference signal memory (64) as reference signal (A).

13. Method according to any of claims 10 to 12, **characterized in that**, for checking the seal, a second optical interrogation signal is coupled into the at least one waveguide (3, 31, 32) and the signal (B) reflected by the Bragg gratings (51, 52, 53, 54) is detected as a signature and compared with the reference signal (A).

14. Method according to any of claims 10 to 13, **characterized in that** the first and/or second optical interrogation signal contains a plurality of individual pulses, at least some of which have different wavelengths and/or different propagation time and/or different polarization.

15. Method according to any of claims 10 to 14, **characterized in that** the temperature is measured with at least a second Bragg grating (41) and the signal reflected by the Bragg gratings (51, 52, 53, 54) is standardized to the temperature.

## Revendications

1. Sceau (1) comprenant un substrat (10) qui peut être appliqué sur un objet (2) à sceller, de sorte que celui-ci est modifié en cas d'enlèvement non autorisé, dans lequel
le substrat (10) présente une forme polygonale ou ronde et contient ou est constitué d'un polymère et/ou d'un verre, et au moins un guide d'ondes optique (3, 31, 32) est disposé dans le substrat (10), dans lequel est disposé au moins un premier réseau de Bragg (51, 52, 53, 54),
**caractérisé en ce que**
le substrat présente une épaisseur inférieure à environ 200 µm, une longueur supérieure à 1 mm et une largeur supérieure à 1 mm.

2. Sceau selon la revendication 1,
**caractérisé en ce que** le substrat (10) présente une épaisseur inférieure à environ 100 µm ou inférieure à environ 80 µm ou inférieure à environ 50 µm.

3. Sceau selon la revendication 1 ou 2,
**caractérisé en ce qu'**au moins un coupleur (35) est en outre disposé dans le substrat.

4. Sceau selon l'une des revendications 1 à 3,
**caractérisé en ce que** ledit au moins un guide d'ondes (3, 31, 32) est conçu pour permettre un guidage monomode de la lumière.

5. Sceau selon l'une des revendications 1 à 4,
**caractérisé en ce qu'**au moins un premier réseau de Bragg (51, 52, 53, 54) présente une réflexion et/ou transmission dépendante de la polarisation.

6. Sceau selon l'une des revendications 1 à 5,
**caractérisé en ce que** le substrat (10) est entouré, sur au moins une délimitation, d'un cadre (5).

7. Sceau selon l'une des revendications 1 à 6,
comprenant en outre un guide d'ondes de connexion (4).

8. Sceau selon la revendication 7,
**caractérisé en ce qu'**un deuxième réseau de Bragg (41) est disposé dans le guide d'ondes de connexion (4).

9. Système comprenant un sceau selon l'une des revendications 1 à 8,
comprenant en outre un dispositif de lecture (6) qui comprend une source de lumière (61) et/ou un spectromètre (62) et/ou un dispositif d'évaluation (63) et/ou une mémoire de signal de référence (64).

10. Procédé de scellement, dans lequel un sceau (1) comprenant un substrat (10) est appliqué sur un objet à sceller (2), de sorte que celui-ci est modifié en cas d'enlèvement non autorisé,
dans lequel
le substrat (10) présente une forme polygonale ou ronde et contient ou est constitué d'un polymère et/ou d'un verre, et au moins un guide d'ondes optique (3, 31, 32) est disposé dans le substrat (10), dans lequel est disposé au moins un premier réseau de Bragg (51, 52, 53, 54),
**caractérisé en ce que**
le substrat présente une épaisseur inférieure à environ 200 µm, une longueur supérieure à 1 mm et une largeur supérieure à 1 mm.

11. Procédé selon la revendication 10,
**caractérisé en ce que** le substrat (10) est soumis à une contrainte mécanique lors de son application sur l'objet (2) à sceller.

12. Procédé selon l'une des revendications 10 ou 11,
**caractérisé en ce qu'**après l'application du substrat sur l'objet (2) à sceller, un premier signal optique d'interrogation est injecté dans ledit au moins un guide d'ondes (3, 31, 32), et le signal réfléchi par les réseaux de Bragg (51, 52, 53, 54) est saisi sous forme de signature et est enregistré comme signal de référence (A) dans une mémoire de signal de référence (64).

13. Procédé selon l'une des revendications 10 à 12,
**caractérisé en ce que**, pour vérifier le sceau, un deuxième signal optique d'interrogation est injecté dans ledit au moins un guide d'ondes (3, 31, 32), et le signal (B) réfléchi par les réseaux de Bragg (51, 52, 53, 54) est saisi comme signature et comparé au signal de référence (A).

14. Procédé selon l'une des revendications 10 à 13,
**caractérisé en ce que** le premier et/ou le deuxième signal optique d'interrogation contient une pluralité d'impulsions individuelles qui présentent au moins partiellement des longueurs d'onde différentes et/ou des durées différentes et/ou des polarisations différentes.

15. Procédé selon l'une des revendications 10 à 14,
**caractérisé en ce que** la température est mesurée avec au moins un deuxième réseau de Bragg (41), et le signal réfléchi par les réseaux de Bragg (51, 52, 53, 54) est normalisé par rapport à la température.
